# EUROPÄISCHE PATENTANMELDUNG

(11) **EP 0 773 358 A1**
(43) Veröffentlichungstag der Anmeldung: **14.05.1997**
(21) Anmeldenummer: 96107472.1
(22) Anmeldetag: 10.05.1996
(51) Int. Cl.: F02F 7/00, F16J 15/14, F02F 11/00

(54) **Verfahren zur Herstellung einer Dichtung sowie Presseinrichtung**

(30) Priorität: 10.11.1995 DE 19542032
(71) Anmelder: Druckgusswerk Mössner GmbH, 81737 München (DE)
(72) Erfinder: Bach, Walter, Ing., 8934 Altenmarkt 16 (AT); Bebjak, Stefan, A 1100 Wien (AT)
(74) Vertreter: Baronetzky, Klaus, Dipl.-Ing.

(57) **Zusammenfassung**

Bei dem Verfahren zur Herstellung einer Dichtung an einem Formkörper, insbesondere dem Zylinderkopfdeckel eines Kraftfahrzeugmotors, ist in den insbesondere als Druckgußteil ausgebildeten Zylinderkopf eine Lagernut für die Dichtung eingebracht. Die Dichtung wird unter Druck aufgebracht. Zunächst wird die Dichtung in eine Gegenformnut einer Gegenform mit einem definierten Überschuß von Dichtungsmaterial eingebracht, der das Volumen der Lagernut etwas übersteigt. Unter Druckaufbringung zwischen dem Formkörper und der Gegenform wird sie ausgehärtet.

## Beschreibung

Die Erfindung betrifft ein Verfahren zur Herstellung einer Dichtung an einem Formkörper, gemäß dem Oberbegriff von Anspruch 1 sowie eine Preßeinrichtung gemäß dem Oberbegriff von Anspruch 9.

Es ist bekannt, eine Dichtung, beispielsweise an einem aus Druckgußmaterial gefertigten Zylinderkopfdeckel eines Kraftfahrzeugmotors dadurch aufzubringen, daß mittels einer Kartuschenspritze oder einer anderen Appliziervorrichtung Dichtungsmaterial, wie beispielsweise Silikonelastomer, in die Lagernut des Zylinderkopfdeckels unter Hochdruck aufgebracht wird, um die Dichtung möglichst sicher in der Lagernut zu verankern.

Aus der DE-OS 30 18 074 ist es bekannt, eine Silikonkautschukdichtung in einer oder mehreren Schichten aufzutragen und ein Lösungsmittel bei Raumtemperatur verdunsten zu lassen und damit die Aushärtung der Dichtung zu realisieren.

Problem bei derartigen Dichtung ist, daß bei der entsprechenden Fertigungsgeschwindigkeit, wie sie beispielsweise in der Kraftfahrzeugindustrie erforderlich ist, leicht Bläschen in der Dichtung enstehen, die jedoch die Dichtungseigenschaften der Dichtung zunichte machen. Daher ist es bekannt geworden, mit erheblichen Drücken zu arbeiten, wie beispielsweise einem Druck von 60 bar. Ein derartiger Druck bedingt jedoch nicht nur eine entsprechend stabile Abstützung der Zylinderkopfdeckeldichtung, die entweder aus einem geformten Blechteil oder bevorzugt aus einem Druckgußteil besteht. Die für die Aufbringung erforderliche Hochdruckpresse ist auch recht aufwendig und teuer, zumal wenn das Auftragen automatisiert werden muß. Sämtliche Gelenke u.s.w. des Auftragsarms müssen dann nämlich dem hohen Druck Widerstand leisten, wobei dennoch die Formtreue nicht vernachlässigt werden darf.

Ferner ist es bekannt, die Dichtung als Strangpreßprofil herzustellen, wobei zahllose Formen für die Ausgestaltung der Dichtung bekanntgeworden sind. Beispiele hierfür lassen sich z.B. aus der DE-OS 24 37 567 und DE-OS 25 51 360 entnehmen. Zwar ist das verwendete Material so ausgewählt, daß es im wesentlichen resistent sowohl in öligen Umgebungen als auch gegenüber den bei altem Öl gegebenenfalls auftretenden Säurebestandteilen ist. Insbesondere heiß und damit dünnflüssige Öle neigen jedoch dazu, Dichtungen zu unterkriechen, und zwar insbesondere bei der Verwendung von Druckguß-Zylinderkopfdeckeln, die regelmäßig eine etwas größere Oberflächenrauhigkeit aufweisen als Blechdeckel.

Demgegenüber liegt der Erfindung die Aufgabe zugrunde, ein Verfahren zur Herstellung einer Dichtung an einem Formkörper gemäß dem Oberbegriff von Anspruch 1 sowie eine Preßeinrichtung gemäß dem Oberbegriff von Anspruch 9 zu schaffen, das bzw. die eine dauerhafte Abdichtung auch gegenüber dünnflüssigen Ölen und bei aus Druckguß gefertigten Formkörpern erlaubt, wobei dennoch die Herstellung geringere Investitionen trotz Einhaltung der erforderlichen Maßhaltigkeit verlangen soll.

Diese Aufgabe wird erfindungsgemäß durch Anspruch 1 gelöst. Vorteilhafte Weiterbildungen ergeben sich aus den Unteransprüchen.

Überraschend läßt sich mit der erfindungsgemäßen Lösung sicherstellen, daß die in die Lagernut des Formkörpers eingebrachte Dichtung sowohl bläschenfrei als unterkriechsicher ist, ohne daß eine Hochdruckaufbringung erforderlich wäre. Durch die Einbringung der Dichtung zunächst in die Gegenform wird sichergestellt, daß in der Wirkfläche der Dichtung, die später an dem Zylinderkopf oder einer anderen Gegenfläche für den Formkörper anliegt, keine Bläschen entstehen können. Etwaige Bläschen entstehen auch bei Niederdruckaufbringung regelmäßig nicht unten oder wandern zumindest nach oben, also außerhalb des Bereichs der Wirkfläche der Dichtung. Durch das Anpressen zwischen dem Formkörper und der Gegenform werden etwaige Bläschen entfernt, wobei im Grunde jedoch auch die Ausbildung von Bläschen, die im Nutengrund der Lagernut vollständig von Dichtungsmaterial umgeben wären, unkritisch wäre.

Offenbar geht das Dichtungsmaterial beim Anpressen zwischen Formkörper und Gegenform eine intensive Verbindung mit dem umgebenden Material, also insbesondere dem Druckgußmaterial ein, so daß auch ein Unterkriechen sicher verhindert wird.

Gegenüber dem Hochdruckverfahren bei der Auftragung der Dichtung unmittelbar in situ in die Lagernut hat das erfindungsgemäße Verfahren den Vorteil, daß mit erheblich geringeren Drücken gearbeitet werden kann. Überraschend ist auch beim Andrücken zwischen Formkörper und Gegenform ein besonderer Druck nicht erforderlich, wobei es sich versteht, daß für die Aushärtung geeignete Umgebungsbedingungen realisiert werden müssen.

In diesem Zusammenhang ist es im Rahmen einer bevorzugten Ausführungsform vorgesehen, die Dichtung warm auszuhärten, insbesondere bei etwa 150°C. Der vorhandene Überschuß, der die Lagernut ausfüllt und Zusatzmaterial gegenüber der Lagernut bereitstellt, bietet eine ausreichende Sicherheitsmarge für die vollständige Ausfüllung der Lagernut, wobei es sich versteht, daß bei der Aushärtung nicht-schrumpfende Materialien bevorzugt sind.

Besonders bevorzugt ist ein hitzehärtendes zweikomponentiges Silikon-Elastomer, das das erforderliche Maß an mechanischen Eigenschaften und ein gutes Rückstellvermögen aufweist.

Besonders günstig ist es ferner, daß mit der erfindungsgemäßen Lösung ein Formkörper wie ein Druckgußteil einschließlich der Dichtung vorfertigbar ist und beispielsweise dem Motorenhersteller in vorgefertigtem Zustand anlieferbar ist.

Weitere Einzelheiten, Vorteile und Merkmale ergeben sich aus der nachstehenden Beschreibung zweier Ausführungsbeispiele der Erfindung anhand der Zeichnung.

Es zeigen:
- Fig. 1: eine Schnittansicht einer in eine Gegenform aufgebrachten Dichtung zur Verwendung in einer ersten Ausgestaltung eines erfindungsgemäßen Verfahrens;
- Fig. 2: die Dichtung gemäß Fig. 1 nach dem Andruck zwischen Gegenform und Formkörper, dem Aushärten und der Entformung;
- Fig. 3: eine schematische Darstellung des Aufbringens des Dichtungsmaterials in die Gegenformnut in einer anderen Ausgestaltung der Erfindung; und
- Fig. 4: die in die Gegenformnut gemäß Fig. 3 eingebrachte Dichtung, vor dem Aufsetzen des Formkörpers.

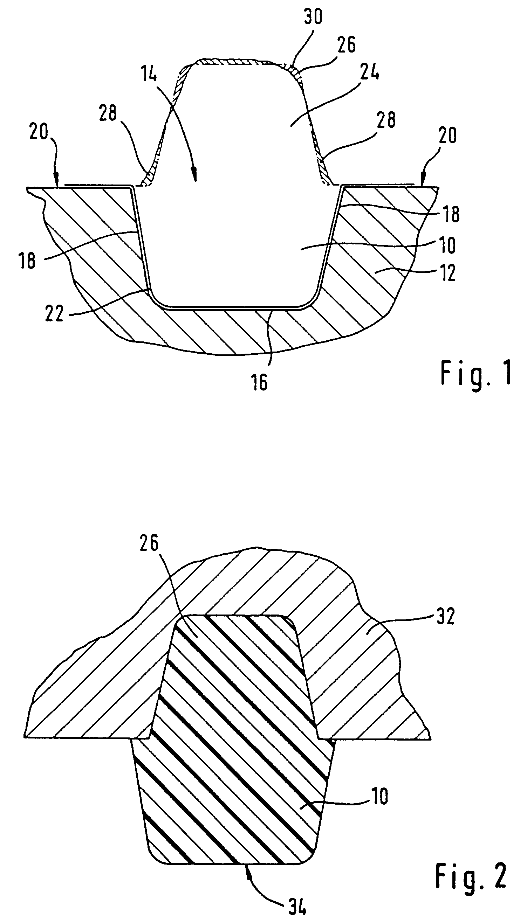

Aus Fig. 1 ist ersichtlich, in welcher Weise die erfindungsgemäße Dichtung 10 in eine Gegenform 12 aufgebracht wird. Die Gegenform 12 weist eine Gegenformnut 14 auf, die an ihren Nutgrund 16 den Nutenflanken 18 und den Seitenflächen 20 mit einer Abweisschicht 22 versehen ist, die ein leichteres Entformen erlaubt und gegenüber dem Material der Dichtung 10 also z.B. Silikon-Elastomer, abweisend ausgebildet ist.

Die Dichtung 10 wird bei Raumtemperatur von etwa 20°C in die Gegenformnut 14 eingebracht, wobei ein Überschuß 24 erheblich über den Seitenflächen 20 vorragt. Der Überschuß 24 ist so bemessen, daß er eine in Fig. 1 gestrichelt angedeutete Lagernut 26 vollständig auszufüllen vermag. Dementsprechend sind die Flächen 28 in ihrer Summe etwas größer als die Fläche 30, wobei das Verhältnis der Flächen zueinander einerseits berechnet werden kann und zweckmäßig empirisch festgelegt wird.

Es versteht sich, daß beliebige andere Formen des Überschusses 24 auch möglich sind. Bevorzugt ist es, eine einfache Herstellung mittels der Niederdruck-Auftragvorrichtung zu ermöglichen, wobei es sich auch versteht, daß die Temperatur bei der Vorerwärmung so gewählt ist, daß die Dichtung 10 ausreichend viskos ist, um vollständig in die Haltenut 26 eindringen zu können.

Unmittelbar nach Aufbringen der Dichtung 10 in die Gegenformnut 14 wird die nicht dargestellte Heizung eingeschaltet, um die Temperatur soweit zu erhöhen, daß die Aushärtung beginnen kann. Zugleich wird dann der aus Fig. 2 ersichtliche Formkörper 32 auf die Gegenform 12 aufgebracht und durch Andrücken dieser Teile aneinander der Überschuß 24 so verformt, daß die Dichtung 10 die im Bereich der Haltenut 26 erforderliche Form annimmt. Nachdem die Fläche 30 etwas kleiner als die Flächen 28 ist, wird Überschußmaterial der Dichtung 10 seitlich herausgedrückt. Es ist unkritisch, dieses Material an dem Formkörper 32 zu belassen, nachdem es die eigentliche Dichtungsfunktion nicht stört. Es versteht sich jedoch, daß das Material bei Bedarf mit geeignetem Mittel entfernt werden kann.

Die Temperatur der Einheit aus Formkörper 32 und Gegenform 12 wird solange auf der Aushärttemperatur gehalten, wie dies für das Aushärten der Dichtung 10 erforderlich ist, also z.B. 1 bis 2 Minuten. In diesem Zusammenhang ist es für die Erzielung guter Taktzeiten günstig, wenn mit der Erwärmung von Gegenform und Formkörper bereits begonnen wird, sobald die Dichtung 10 in den in Fig. 1 dargestellten Zustand gebracht worden ist.

In diesem Zusammenhang ist es günstig, wenn eine Gegenform 12 mit vergleichsweise geringer Wärmekapazität bereitgestellt wird, also beispielsweise ein Hohlprofil, das gerade im Bereich der Gegenformnut 14 unterstützt ist, um den erforderlichen Drücken standzuhalten.

Auch in diesem Zusammenhang ist es besonders günstig, daß keine Hochdruck-, sondern eine Niederdruckauftragung der Dichtung erforderlich ist. Dementsprechend sind die Belastungsanforderungen sowohl für die Abstützung des beispielsweise als Zylinderkopfdeckel ausgebildeten Formkörpers 32 als auch für die Gegenform 12 wesentlich reduziert.

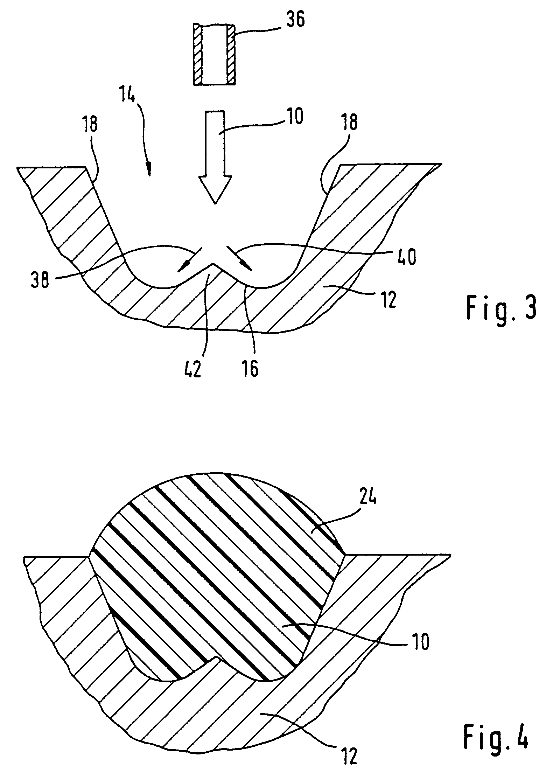

Eine weitere Ausgestaltung der erfindungsgemäßen Lösung ist aus Fig. 3 und 4 besser ersichtlich. Während sich die Form der Dichtung 10 gemäß Fig. 1 und 2 bereits ohne weiteres blasenfrei auftragen läßt, wobei besonders die Blasenarmut im Bereich einer Wirkfläche 34 wichtig ist, unterstützt die Ausgestaltung der Gegenformnut 14 in Fig. 3 und 4 die Blasenfreiheit bei hohen Auftragsgeschwindigkeiten trotz niedrigem Druck. Eine Auftragdüse 36 als Teil einer Niederdruck-Auftragsvorrichtung läßt Dichtungsmaterial 10 von oben in die Nut 14 eintreten. Der Nutengrund 16 hat eine spezielle Ausgestaltung, die eine besonders günstige Strömungsumlenkung des eintretenden Dichtungsmaterials bewirkt. Wie aus den in Fig. 3 dargestellten Pfeilen 38, 40 ersichtlich ist, wird das Dichtungsmaterial von einer Führungsspitze 42 je seitlich abgeleitet und strömt an den Flächen des Nutgrundes 16 und den sich daran anschließenden Flanken 18 sich an diesen anlegend entlang, um den gesamten Bereich der Gegenführungsnut 14 auszufüllen. Im Ergebnis entsteht die aus Fig. 4 ersichtliche Form der Dichtung 10 vor der Aufbringung des Formkörpers 32 auf die Gegenform 12.

Es versteht sich, daß die Auftragdüse 36 in geeigneter Weise ausgerichtet sein kann. Im Beispielsfalle ist vorgesehen, eine in der Zeichnungsebene senkrechte Ausrichtung zu wählen, wobei gewünschtenfalls eine Neigung quer zur Zeichnungsebene ebenfalls vorgesehen sein kann, um das Ausströmen des viskosen Dichtungsmaterials 10 zu erleichtern.

Diese Ausführungsform ist besonders für die rasche Ausbildung einer luftblasenfreien Dichtung 10 geeignet. Es versteht sich, daß es erfindungsgemäß besonders günstig ist, daß grundsätzlich ohne besondere Schutzgasatmosphäre gearbeitet werden kann, nachdem es bevorzugt ist, ein lösungsmittelfreies Dichtungsmaterial zu wählen, daß beispielsweise als Zweikomponenten-Dichtungsmaterial ausgebildet sein kann.

Anstelle der dargestellten Form des Überschusses 24 ist es auch möglich, einen Überschuß 24 bereits mittels der Auftragdüse 36 in an sich bekannter Weise derart zu realisieren, daß er in seiner Form der Form der Lagernut 26 nahekommt. Zwar muß dann je nach Lagernut eine spezielle Düsenform gewählt werden, jedoch ist die erforderliche Materialverdrängung geringer, so daß im Grunde schneller gearbeitet werden kann.

## Patentansprüche

1. Verfahren zur Herstellung einer Dichtung an einem Formkörper, insbesondere dem Zylinderkopfdeckel eines Kraftfahrzeugmotors, bei welchem Verfahren in den insbesondere als Druckgußteil ausgebildeten Zylinderkopfdeckel eine Lagernut für die Dichtung eingebracht ist und bei welchem Verfahren die Dichtung unter Druck aufgebracht wird, dadurch gekennzeichnet, daß die Dichtung zunächst in eine Gegenformnut einer Gegenform mit einem definierten Überschuß von Dichtungsmaterial eingebracht wird, der das Volumen der Lagernut etwas übersteigt und daß sie unter Druckaufbringung zwischen dem Formkörper und der Gegenform ausgehärtet wird.

2. Verfahren nach Anspruch 1, dadurch gekennzeichnet, daß der Überschuß in plastisch verformbarem Zustand vor dem Aushärten in die Lagernut eingedrückt wird.

3. Verfahren nach Anspruch 1 oder 2, dadurch gekennzeichnet, daß die Dichtung in die Gegenform mit Niederdruck von 1,5 bis 6 bar, bevorzugt etwa 3 bar, eingebracht wird.

4. Verfahren nach einem der vorhergehenden Ansprüche, dadurch gekennzeichnet, daß die Dichtung mit einer Niederdruckdosier- und -mischvorrichtung aufgebracht wird und insbesondere ein warmaushärtendes zweikomponentiges Silikon-Elastomer ist.

5. Verfahren nach einem der vorhergehenden Ansprüche, dadurch gekennzeichnet, daß das Dichtungsmaterial und/oder der Formkörper und/oder die Gegenform vor Aufbringen der Dichtung in die Gegenformnut insbesondere auf etwa 60°C vorgewärmt wird.

6. Verfahren nach einem der vorhergehenden Ansprüche, dadurch gekennzeichnet, daß die Gegenform eine vergleichsweise geringe Masse aufweist und im Bereich der Gegenformnut ausgesteift ist.

7. Verfahren nach einem der vorhergehenden Ansprüche, dadurch gekennzeichnet, daß die Gegenform mindestens im Bereich der Gegenformnut mit einer Abweisschicht für das Dichtungsmaterial abgedeckt ist, die das Entformen erleichtert und daß die Abweisschicht insbesondere aus Polytetrafluorethylen besteht.

8. Verfahren nach einem der vorhergehenden Ansprüche, dadurch gekennzeichnet, daß das Dichtungsmaterial frei von Lösungsmitteln, insbesondere frei von Essigsäureäthylester, ist.

9. Preßeinrichtung zur Anbringung einer Dichtung an einem Formkörper, insbesondere einem Zylinderkopfdeckel eines Kraftfahrzeugmotors, bei welchem der Formkörper eine vorbereitete Lagernut für die Dichtung aufweist, dadurch gekennzeichnet, daß die Preßeinrichtung eine vielfach verwendbare Gegenform mit einer Gegenformnut (14) aufweist, in welche Dichtungsmaterial (10) mit einem definierten Überschuß (24), insbesondere mittels einer Niederdruck-Auftragvorrichtung, einbringbar ist, wobei der Überschuß (24) das Volumen der Lagernut (26) etwas übersteigt und daß mit der Preßeinrichtung der Überschuß in die Lagernut (26) eindrückbar und zwischen Formkörper (32) und Gegenform (12) die Dichtung (10) insbesondere unter Wärmeeinwirkung aushärtbar ist.

10. Preßeinrichtung nach Anspruch 9, dadurch gekennzeichnet, daß die Gegenform (12) unten angebracht ist und das Dichtungsmaterial (10) von oben in die Gegenformnut (14) einbringbar ist.

11. Preßeinrichtung nach einem der vorhergehenden Ansprüche, dadurch gekennzeichnet, daß die Preßeinrichtung eine Heizung aufweist, mit welcher die Temperatur insbesondere des Formstücks und /oder der Gegenform (12) zwischen einer Vorwärmtemperatur von insbesondere etwa 60°C und einer Aushärttemperatur von insbesondere etwa 150°C zyklisch wechselnd steuerbar ist und daß die Preßeinrichtung einen Vorwärmbereich für frisch zugeführte und mit der Dichtung (10) zu bestückende Formkörper (32) wie Zylinderkopfdeckel aufweist.
